# DEMANDE DE BREVET EUROPEEN

(11) **EP 3 815 934 A1**
(43) Date de publication de la demande: **05.05.2021**
(21) Numéro de dépôt: 20202048.3
(22) Date de dépôt: 15.10.2020
(51) Int. Cl.: B60D 1/01, B60D 1/30, B60D 1/62, B60P 1/16, B62D 53/06, B62D 53/08, B60P 1/04, B60R 16/023, B60W 30/04

(54) **SYSTEME DE SECURITE POUR VEHICULE DE TRANSPORT INDUSTRIEL COMPORTANT UN VEHICULE TRACTEUR ET UNE SEMI-REMORQUE AVEC CAISSON DE CHARGEMENT BASCULANT**

(30) Priorité: 28.10.2019 FR 1912036
(71) Demandeur: BENALU, 62800 Lievin (FR)
(72) Inventeur: GRESSIER, Christophe, 59251 Allennes les Marais (FR)
(74) Mandataire: Matkowska, Franck

(57) **Abrégé**

Le système de sécurité (3), pour véhicule de transport industriel (V) comportant un véhicule tracteur (1) et une semi-remorque (2), comporte un dispositif de détection de la rotation du véhicule tracteur (1) par rapport à la semi-remorque (2) autour de l'axe de rotation vertical (A), et au moins un capteur de pression (30), qui est apte à détecter la pression hydraulique (P) dans des moyens de levage hydrauliques (24) permettant de lever le caisson chargement (22) vide ou chargé par rapport au châssis (21) en le faisant pivoter vers le haut. Ce système de sécurité (3) est apte à détecter automatiquement un risque de renversement du véhicule de transport industriel (V), à partir de la pression hydraulique (P) détectée par le capteur de pression (30) et de l'angle de rotation entre le véhicule tracteur (1) et la semi-remorque (2) détecté au moyen du dispositif de détection.

## Description

### Domaine technique

La présente invention concerne un système de sécurité pour véhicule de transport industriel, du type comportant un véhicule tracteur et une semi-remorque comportant un châssis roulant, sur lequel est monté un caisson de chargement apte à pivoter vers le haut par rapport au châssis roulant, afin notamment de permettre le déchargement par gravité de son chargement. Ce système de sécurité permet de détecter automatiquement un risque de renversement du véhicule découlant d'un défaut d'alignement entre la semi-remorque et le véhicule tracteur.

### Art antérieur

Il est connu d'utiliser des véhicules de transport industriels du type susvisé pour transporter tout type de produits, et plus particulièrement, mais non exclusivement, des produits en vrac tels que par exemple, et de manière non exhaustive, des matières agricoles en vrac (céréales, betteraves, pommes de terre, ...), des matériaux de terrassement ou déchets en vrac (terre, sable, gravas...).

Le châssis roulant de la semi-remorque est apte à être attelé au véhicule tracteur par l'intermédiaire d'un dispositif d'attelage conçu de manière à permettre un pivotement de la semi-remorque par rapport au véhicule tracteur au moins autour d'un axe de rotation vertical.

Lorsque la semi-remorque est attelée au véhicule tracteur, le châssis roulant de la semi-remorque repose à l'arrière sur un ou plusieurs essieux et à l'avant sur le véhicule tracteur par l'intermédiaire dudit système d'attelage, de sorte que le véhicule tracteur supporte une partie notable du poids de la semi-remorque et de son chargement.

Le caisson de chargement porté par le châssis roulant peut selon le cas être non-amovible ou être amovible par rapport au châssis roulant de la semi-remorque, afin de pouvoir être déposé sur le sol.

Ce caisson de chargement peut être de type benne ouverte sur le dessus pour son chargement gravitaire ou peut être un caisson fermé de type conteneur.

Pour permettre le basculement vers le haut du caisson de chargement par rapport au châssis roulant, la semi-remorque est de manière usuelle équipée d'un circuit hydraulique alimentant un ou plusieurs vérins de levage hydrauliques, qui sont montés entre le châssis roulant et le caisson de chargement basculant, et qui permettent de lever le caisson de chargement en le faisant pivoter vers le haut par rapport au châssis roulant. Selon le type de véhicule transport industriel, le caisson de chargement peut être apte à basculer par rapport au châssis roulant vers le haut et vers l'arrière du véhicule et/ou le caisson de chargement peut être apte à basculer par rapport au châssis roulant vers le haut et latéralement vers au moins un des côtés du véhicule, voire dans certain cas vers chaque côté du véhicule.

Pour décharger ce type de caisson basculant par voie gravitaire, le chauffeur du véhicule commande le ou les vérins de levage hydrauliques, de manière à faire basculer progressivement vers le haut et selon le cas vers l'arrière ou latéralement le caisson de chargement basculant, de manière à obtenir une évacuation gravitaire progressive de son chargement. Au cours d'une telle opération de déchargement, il est primordial que la semi-remorque et le véhicule tracteur soient dans l'alignement l'un de l'autre, car un défaut d'alignement présenterait le risque d'occasionner un renversement accidentel sur le côté de la semi-remorque et du véhicule tracteur.

En outre, lorsque le véhicule de transport industriel est en train de rouler, en fonction des virages pris par le véhicule tracteur, la semi-remorque pivote nécessairement autour d'un axe vertical par rapport au véhicule tracteur, ce qui provoque nécessairement un défaut d'alignement plus ou moins important de la semi-remorque par rapport au véhicule tracteur. Au cours de cette phase de roulage, il est également primordial que le caisson basculant ne soit pas basculé vers le haut, même d'un angle de basculement faible, afin d'éviter un renversement accidentel sur le côté de la semi-remorque et du véhicule tracteur.

Afin de réduire les risques de renversement d'une semi-remorque à caisson de chargement basculant, on a déjà proposé notamment dans la demande de brevet européen EP 2 781 404, un système de sécurité qui comporte notamment un capteur mesurant l'angle de basculement du caisson de chargement par rapport au châssis, des moyens de détection mesurant l'angle d'alignement du véhicule tracteur par rapport à la semi-remorque et des moyens de traitement électroniques qui permettent de déclencher automatiquement une alerte lorsque l'angle de basculement et l'angle d'alignement mesurés sont trop importants.

Compte-tenu des pressions hydrauliques qui sont nécessaires en pratique pour lever et faire pivoter le caisson de chargement basculant par rapport au châssis et compte-tenu de l'inertie de l'ensemble vérin(s) hydraulique(s)/caisson de chargement basculant, en particulier lorsque le caisson est chargé, il peut arriver que la détection d'un défaut d'alignement de la semi-remorque par rapport au véhicule tracteur combinée à la détection d'un angle de basculement trop important du caisson basculant par rapport au châssis interviennent trop tardivement, y compris lorsque le seuil de détection utilisé pour l'angle de basculement du caisson est faible.

La mise en œuvre de cette solution technique présente ainsi le risque et l'inconvénient dans de nombreux cas d'aboutir à une détection trop tardive d'une situation à risque et de ce fait de conduire à un déclenchement d'alerte trop tardif pour que le chauffeur du véhicule puisse réagir à temps et éviter un renversement du véhicule en commandant manuellement l'abaissement du caisson de chargement.

### Objectif de l'invention

La présente invention a pour objectif principal de proposer une nouvelle solution technique, qui permet de détecter automatiquement un risque de renversement d'un véhicule industriel du type susvisé, lié à un défaut d'alignement de la semi-remorque par rapport au véhicule tracteur, et qui peut dans de nombreuses situations pallier l'inconvénient susvisé de l'art antérieur lié une détection de l'angle de basculement du caisson de chargement basculant et à un risque de retard dans la détection du risque de renversement du véhicule.

### Résumé de l'invention

L'invention a ainsi pour objet un système de sécurité pour véhicule de transport industriel comportant un véhicule tracteur et une semi-remorque, qui est apte à être attelée au véhicule tracteur, de manière à pouvoir pivoter par rapport au véhicule tracteur au moins autour d'un axe de rotation vertical, ladite semi-remorque comportant un châssis roulant sur lequel est monté un caisson de chargement vide ou chargé, qui est apte à pivoter vers le haut par rapport au châssis roulant, et des moyens de levage hydrauliques, qui comportent au moins un vérin de levage hydraulique, et qui permettent de lever le caisson de chargement en le faisant pivoter vers le haut par rapport au châssis roulant.

Ce système de sécurité est défini dans la revendication 1. Dans le présent texte, on désigne par châssis « roulant » ou par véhicule industriel « roulant», un châssis ou véhicule industriel apte à rouler.

De manière facultative selon l'invention, le système de sécurité de l'invention peut également comporter les caractéristiques techniques optionnelles ci-après, prises isolément ou en combinaison :
- Le système de sécurité est apte à détecter automatiquement un risque de renversement du véhicule de transport industriel alors que le caisson de chargement est en position basse sur le châssis de la semi-remorque et n'est pas soulevé par rapport au châssis de la semi-remorque.
- le système de sécurité est apte à détecter automatiquement un défaut d'alignement entre le véhicule tracteur et la semi-remorque au moyen du dispositif de détection et à détecter automatiquement un risque de renversement du véhicule de transport industriel, lorsque ledit défaut d'alignement entre le véhicule tracteur et la semi-remorque est détecté et qu'une pression hydraulique supérieure à un seuil de pression (Sp) est détectée par le capteur de pression.
- le système de sécurité est apte à détecter automatiquement ledit risque de renversement du véhicule de transport industriel, tant que ledit défaut d'alignement entre le véhicule tracteur et la semi-remorque est détecté ou tant qu'une pression hydraulique supérieure à un seuil de pression (Sp) est détectée par le capteur de pression.
- le seuil de pression (Sp) est réglable.
- le seuil de pression (Sp) est inférieur ou égal à la pression hydraulique minimale nécessaire pour soulever le caisson de chargement chargé au maximum du poids total roulant autorisé (PTRA) du véhicule de transport industriel.
- le seuil de pression (Sp) est inférieur ou égal à la pression hydraulique minimale nécessaire pour lever le caisson de chargement chargé à 75% du poids total roulant autorisé (PTRA) du véhicule de transport industriel.
- le seuil de pression (Sp) est inférieur ou égal à la pression hydraulique minimale nécessaire pour lever le caisson de chargement chargé à la moitié du poids total roulant autorisé (PTRA) du véhicule de transport industriel.
- le seuil de pression (Sp) est inférieur ou égal à la pression hydraulique minimale nécessaire pour lever le caisson de chargement chargé à un tiers du poids total roulant autorisé (PTRA) du véhicule de transport industriel.
- le seuil de pression (Sp) est inférieur ou égal à la pression hydraulique minimale nécessaire pour lever le caisson de chargement à vide.
- le seuil de pression (Sp) est inférieur ou égal à 10 bars et plus particulièrement est égal à zéro.
- le système de sécurité est apte à détecter ledit défaut d'alignement entre le véhicule tracteur et la semi-remorque, lorsque l'angle de rotation (a) entre le véhicule tracteur et la semi-remorque détecté au moyen du dispositif de détection est supérieur à au moins un seuil de détection prédéfini.
- le seuil de détection est compris entre 5° et 30°, et de préférence entre 5° et 20°.
- le capteur de pression est monté sur le vérin de levage hydraulique et permet de détecter la pression hydraulique dans ce vérin de levage hydraulique.
- le dispositif de détection comporte un ou plusieurs capteurs de proximité sans contact.
- le ou les capteurs de proximité sans contact sont fixés à la semi-remorque.
- le ou les capteurs de proximité sans contact sont des capteurs inductifs ou des capteurs optiques.
- le système de sécurité est apte à déclencher automatiquement une alarme visuelle et/ou sonore, en cas de détection d'un risque de renversement du véhicule industriel.
- le système de sécurité comporte une mémoire électronique fixe ou amovible, et dans laquelle le système sécurité est apte à stocker, de préférence en les horodatant, la pression hydraulique détectée par le capteur de pression et une information sur l'angle de rotation (a) détecté par le dispositif de détection, au moins à chaque détection d'un risque de renversement et/ou à intervalles de temps prédéfinis.
- au moins ladite mémoire électronique est logée à l'intérieur d'un boîtier de protection, qui est fermé, et qui de préférence est scellé au moyen d'un sceau permettant de contrôler si le boîtier a été ouvert.

L'invention a également pour objet une semi-remorque comportant un châssis roulant sur lequel est monté un caisson de chargement, qui est apte à pivoter vers le haut par rapport au châssis roulant, des moyens de levage, qui comportent au moins un vérin de levage hydraulique, et qui permettent de lever le caisson de chargement, en le faisant pivoter vers le haut par rapport au châssis roulant, et un moyen d'attelage à un véhicule tracteur, ladite semi-remorque étant équipée d'un système de sécurité susvisé.

L'invention a également pour objet un véhicule de transport industriel comportant un véhicule tracteur et une semi-remorque, qui est apte à être attelée au véhicule tracteur, de manière à pouvoir pivoter par rapport au véhicule tracteur au moins autour d'un axe de rotation vertical, ladite semi-remorque comportant un châssis roulant sur lequel est monté un caisson de chargement, qui est apte à pivoter vers le haut par rapport au châssis roulant, et des moyens de levage hydrauliques, qui comportent au moins un vérin de levage hydraulique et qui permettent de lever le caisson de chargement, en le faisant pivoter vers le haut par rapport au châssis roulant, ledit véhicule de transport industriel étant équipé d'un système de sécurité susvisé.

De manière facultative selon l'invention, le véhicule de transport industriel et le système de sécurité peuvent également comporter les caractéristiques techniques optionnelles ci-après, prises isolément ou en combinaison :
- le système de sécurité est monté sur la semi-remorque.
- le véhicule tracteur comporte une sellette d'attelage et la semi-remorque comporte un pivot d'attelage apte à coopérer avec la sellette d'attelage ; le dispositif de détection est apte à détecter la rotation de la sellette par rapport au pivot d'attelage, sans être en contact avec ladite sellette.
- le système de sécurité est apte à détecter automatiquement ledit risque de renversement du véhicule de transport industriel, pendant que le caisson de chargement est en position basse sur le châssis et n'est pas soulevé par rapport au châssis, au moins lorsque le poids total du véhicule de transport industriel chargé est égal au poids total roulant autorisé (PTRA) du véhicule de transport industriel.
- le système de sécurité est apte à détecter automatiquement ledit risque de renversement du véhicule de transport industriel, pendant que le caisson de chargement est en position basse sur le châssis et n'est pas soulevé par rapport au châssis, au moins lorsque le poids total du véhicule de transport industriel chargé est égal à 75% du poids total roulant autorisé (PTRA) du véhicule de transport industriel, de préférence au moins lorsque le poids total du véhicule de transport industriel chargé est égal à la moitié du poids total roulant autorisé (PTRA) du véhicule de transport industriel, et plus préférentiellement encore au moins lorsque le poids total du véhicule de transport industriel chargé est égal à un tiers du poids total roulant autorisé (PTRA) du véhicule de transport industriel.
- le système de sécurité est apte à détecter automatiquement ledit risque de renversement du véhicule de transport industriel, au moins lorsque le caisson de chargement est vide et en position basse sur le châssis de la semi-remorque et n'est pas soulevé par rapport au châssis.

L'invention a également pour objet un procédé de contrôle du fonctionnement du véhicule de transport industriel susvisé au cours d'une opération de déchargement de la semi-remorque du véhicule industriel, procédé au cours duquel initialement le ou les vérins de levage hydrauliques ne sont pas alimentés et le caisson de chargement de la semi-remorque est en position basse sur le châssis et n'est pas encore levé par le ou les vérins de levage hydrauliques, et au cours duquel on commande les moyens de levage hydrauliques, de manière à alimenter le ou les vérins de levage hydrauliques, avec une pression hydraulique croissante, et on contrôle en permanence au moyen du système de sécurité l'angle de rotation (a) entre le véhicule tracteur et la semi-remorque et la pression hydraulique dans les moyens de levage hydrauliques en sorte de détecter automatiquement, au moyen du système de sécurité, un risque de renversement du véhicule de transport industriel pendant la phase de fonctionnement au cours de laquelle le ou les vérins de levage hydrauliques sont alimentés sous pression mais le caisson de chargement de la semi-remorque est en position basse sur le châssis et n'est pas encore levé par le ou les vérins de levage hydrauliques.

Plus particulièrement, mais non nécessairement, on coupe automatiquement ou manuellement l'alimentation hydraulique du ou des vérins de levage hydrauliques, lorsqu'on détecte automatiquement au moyen du système de sécurité un risque de renversement du véhicule de transport industriel pendant la phase de fonctionnement au cours de laquelle le ou les vérins de levage hydrauliques sont alimentés sous pression mais le caisson de chargement de la semi-remorque est en position basse sur le châssis et n'est pas encore levé par le ou les vérins de levage hydrauliques.

### Brève description des figures

D'autres caractéristiques et avantages de l'invention apparaîtront plus clairement à la lecture de la description détaillée ci-après de plusieurs variantes de réalisation de l'invention, laquelle description détaillée est donnée à titre d'exemple non limitatif et non exhaustif de l'invention, et en référence aux dessins annexés sur lesquels :
- la figure 1 est une vue d'ensemble isométrique d'un véhicule de transport industriel, qui comporte une semi-remorque attelée à un véhicule tracteur, et qui est équipé d'un système sécurité conforme à l'invention, le caisson de chargement basculant de la semi-remorque étant en position basse ;
- la figure 2 est une vue d'ensemble isométrique du véhicule de transport industriel de la figure 1, lorsque le caisson de chargement basculant de la semi-remorque est basculé en position haute ;
- la figure 3 est une représentation, en vue de dessus, du véhicule de transport industriel de la figure 1, lorsque le véhicule tracteur et la sem i-remorque ne sont pas alignés ;
- la figure 4 est une vue d'ensemble isométrique du véhicule tracteur, permettant de visualiser la sellette d'attelage ;
- la figure 5 est une représentation isométrique de la semi-remorque, vue de dessous ;
- la figure 6 est agrandissement d'une partie de la figure 5 montrant le pivot d'attelage de la semi-remorque et une variante particulière de réalisation du dispositif de détection de la rotation de la semi-remorque par rapport au véhicule tracteur ;
- la figure 7 est un exemple particulier de réalisation du système de sécurité de l'invention représenté sous forme de schéma-bloc ;
- La figure 8 est une représentation, en vue de dessous, du dispositif d'attelage et du dispositif de détection de la figure 6, lorsque la semi-remorque et le véhicule tracteur sont parfaitement alignés ;
- les figures 9 et 10 sont des représentations, en vue de dessous, du dispositif d'attelage et du dispositif de détection de la figure 6, lorsque la semi-remorque et le véhicule tracteur ne sont pas alignés, la figure 10 étant dans cet exemple particulier caractéristique d'un défaut d'alignement.

### Description détaillée

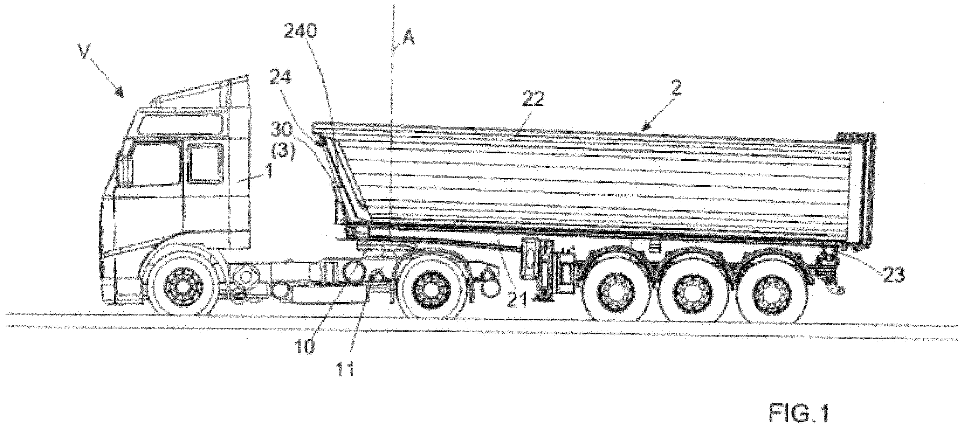

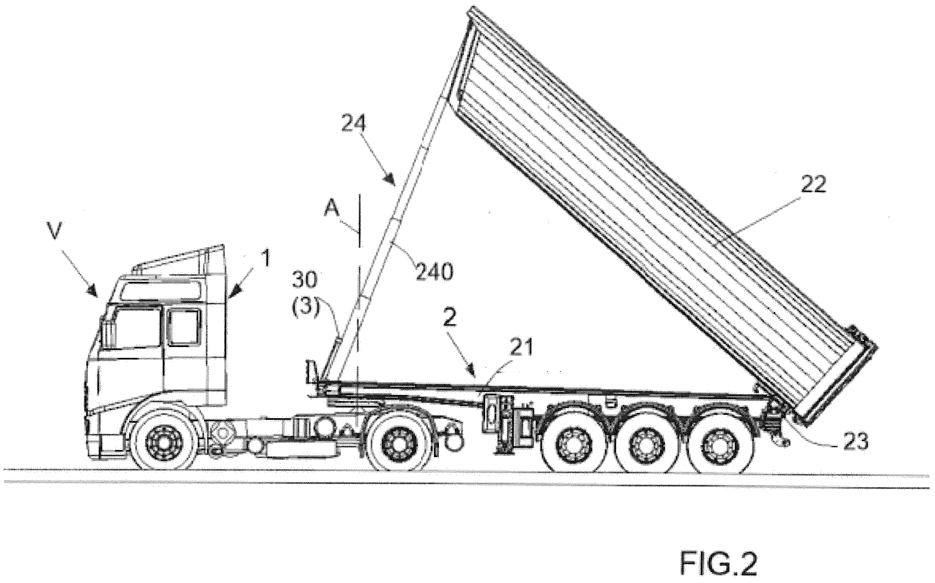

On a représenté sur les figures 1 et 2, un véhicule de transport industriel V, qui comporte un véhicule tracteur 1 et une semi-remorque 2 attelée au véhicule tracteur 1, au moyen d'un dispositif d'attelage, et qui est équipé d'un système de sécurité 3 conforme à l'invention.

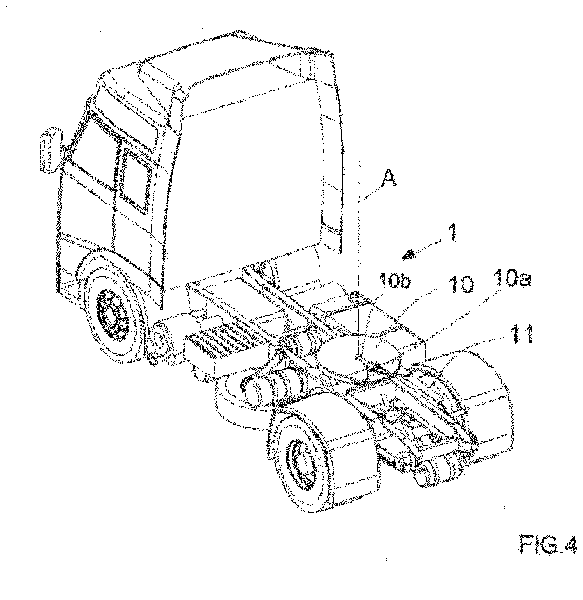

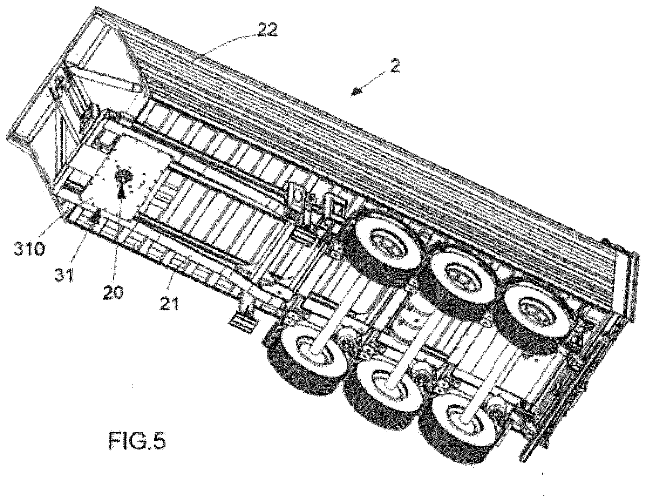

Le dispositif d'attelage comporte par exemple, et de manière usuelle, une sellette 10 (figure 4) qui est montée sur le châssis 11 du véhicule tracteur 1, en étant de manière usuelle articulée en rotation par rapport au châssis 11 autour d'un axe transversal horizontal. Cette sellette 10 comporte en partie arrière une ouverture de guidage 10a en forme de V permettant de guider, jusqu'à un logement cylindrique central 10b de la sellette 10, un pivot d'attelage 20 (figure 5) qui est fixé sous le châssis roulant 21 de la semi-remorque 2 et qui est caractérisé par un axe de rotation A dit « vertical » (figure 5).

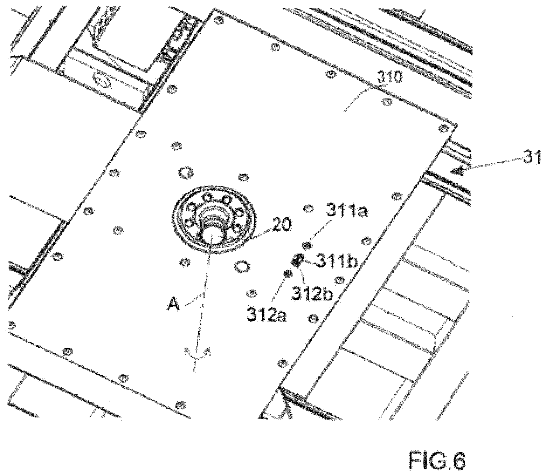

Lorsque la semi-remorque 2 est attelée au véhicule tracteur 1, le pivot d'attelage 20 est logé et guidé en rotation dans le logement cylindrique 10b de la sellette 10, autour de l'axe de rotation A vertical du pivot d'attelage 20 (figures 2, 4 et 6), cet axe de rotation A vertical étant orienté sensiblement perpendiculairement à la surface sur laquelle roule la semi-remorque 2 et le dispositif d'attelage 10/20 permettant au véhicule tracteur 1 de pivoter par rapport à la semi-remorque 2 autour de cet axe de rotation vertical A.

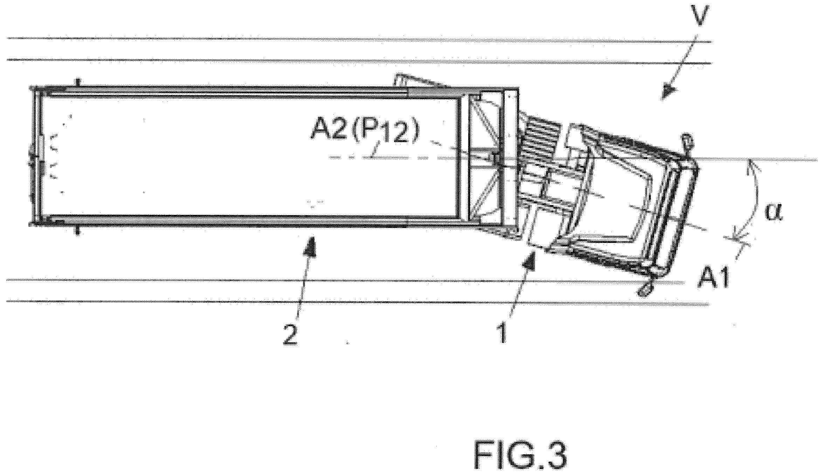

En référence à la figure 3, ce dispositif d'attelage 10/20 permet de manière usuelle au véhicule tracteur 1 de pouvoir tourner par rapport à la semi-remorque 20 notamment lors du roulage du véhicule V, de telle sorte que l'axe longitudinal avant/arrière A1 du véhicule tracteur 1 forme avec l'axe longitudinal avant/arrière A2 de la semi-remorque un angle de rotation a, mesuré dans un plan perpendiculaire à l'axe de rotation vertical A.

Lorsque cet angle de rotation α est nul, la semi-remorque 2 est parfaitement alignée avec le véhicule tracteur 1.

En référence aux figures 1 et 2, la semi-remorque 2 comporte un caisson de chargement 22, qui est monté sur le châssis roulant 21 et qui est apte à pivoter vers le haut et vers l'arrière par rapport au châssis roulant 21 autour d'un axe de rotation transversal horizontal 23 positionné à l'arrière du châssis.

La semi-remorque 2 comporte également des moyens de levage hydrauliques 24, qui permettent (figure 2) de lever le caisson de chargement 22 en le faisant pivoter vers le haut et vers l'arrière autour dudit axe de rotation 23, notamment lors des opérations de déchargement gravitaire par l'arrière du caisson 22.

Il convient de noter que l'invention n'est pas limitée à un caisson de chargement basculant apte à pivoter vers le haut et vers l'arrière par rapport au châssis de la semi-remorque, mais peut s'appliquer également à un caisson de chargement basculant apte à pivoter vers le haut et latéralement vers au moins un des côtés de la semi-remorque, et plus particulièrement latéralement vers chacun des deux côtés de la semi-remorque.

Les moyens de levage hydrauliques 24 comportent, de manière connue en soi, au moins un vérin de levage hydraulique 240 positionné entre le châssis roulant 21 et le caisson de chargement 22. Dans certains cas, les moyens de levage hydrauliques 24 peuvent comporter au moins deux vérins de levage hydrauliques 240 parallèles.

Ces moyens de levage hydrauliques 24 comportent également, de manière connue en soi, un circuit d'alimentation hydraulique, qui permet d'alimenter en énergie hydraulique (typiquement de l'huile sous pression) le ou les vérins de levage hydrauliques 240, par exemple avec de l'énergie hydraulique provenant du véhicule tracteur 1 ou avec de l'énergie hydraulique fournie par une pompe installée sur la semi-remorque 2.

Ce circuit d'alimentation hydraulique est de manière usuelle commandé manuellement par le chauffeur du véhicule V depuis la cabine du véhicule tracteur, de manière à permettre au chauffeur du véhicule V de commander manuellement le levage ou au contraire l'abaissement du caisson de chargement 22.

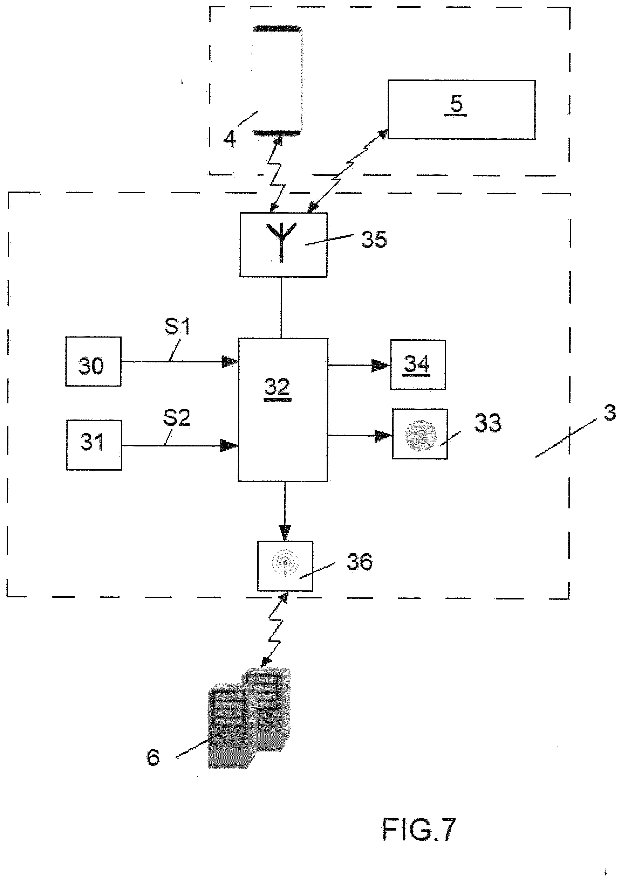

Le système de sécurité 3 (figure 7) comporte au moins un capteur de pression 30 apte à détecter la pression hydraulique dans les moyens de levage hydrauliques 24, un dispositif 31 de détection de la rotation du véhicule tracteur 1 par rapport à semi-remorque 2 autour de l'axe de rotation A susvisé, et une unité de traitement 32, qui est reliée au capteur de pression 30 et au dispositif de détection 31.

Cette unité de traitement 32 est conçue de manière à détecter automatiquement un risque de renversement du véhicule V à partir de la pression hydraulique P détectée par le capteur de pression 30 et d'un défaut d'alignement entre le véhicule tracteur 1 et la semi-remorque 2 détecté à l'aide du dispositif de détection 31.

Tel qu'illustré dans l'exemple particulier des figures 1 et 2, le capteur de pression 30 peut être monté sur le vérin hydraulique 240 de manière à détecter la pression hydraulique P directement dans le vérin hydraulique 240.

Dans une autre variante de réalisation, ce capteur de pression 30 peut être monté en tout point du circuit alimentation hydraulique servant à alimenter le ou les vérins hydrauliques 240.

En référence à la figure 7, ce capteur de pression 30 délivre un signal électrique de détection S1, qui d'une manière générale peut être de type analogique ou numérique, qui est fonction de la pression hydraulique P détectée, et qui est traité par l'unité de traitement 32. Ce signal S1 est de préférence transmis à l'unité de traitement 32 par voie filaire, mais peut également dans une autre variante être transmis à l'unité de traitement 32 par des moyens de communication sans fil.

Lorsque le ou les vérins hydrauliques 240 ne sont pas alimentés en énergie hydraulique et que le caisson de chargement 22 est dans sa position basse de la figure 1, dans laquelle il repose sur le châssis roulant 21 de la semi-remorque 2, la pression P détectée par le capteur de pression 30 est nulle.

Lorsque le chauffeur du véhicule V commande le circuit d'alimentation hydraulique pour lever le caisson de chargement 22 par rapport au châssis, le circuit d'alimentation hydraulique alimente le ou les vérins hydrauliques 240 avec une pression croissante jusqu'à obtenir une pression hydraulique minimale dans le ou les vérins hydrauliques 240, qui est suffisante pour lever caisson de chargement 22 en le faisant pivoter vers le haut et, dans l'exemple particulier et non limitatif des figures annexées, vers l'arrière de la semi-remorque.

La pression hydraulique minimale nécessaire pour commencer à lever le caisson de chargement 2 dépend notamment du poids du caisson de chargement 22, et varie notamment en fonction du poids à vide du caisson de chargement 22 et le cas échéant du poids du chargement dans le caisson de chargement.

Tant que cette pression minimale de levage n'est pas atteinte, le caisson de chargement 22 n'est pas levé par rapport au châssis 21 et reste dans sa position basse de la figure 1.

Le dispositif de détection 31 peut être réalisé au moyen de tout capteur ou ensemble de capteurs permettant de détecter la rotation du véhicule tracteur 1 par rapport la semi-remorque 2 autour de l'axe de rotation A.

En référence à la figure 7, ce dispositif de détection 31 délivre au un ou plusieurs signaux de détection S2, qui d'une manière générale peuvent être de type analogique ou numérique, qui dépendent de l'angle de rotation α détecté entre le véhicule tracteur 1 et la semi-remorque 2, et qui sont traités par l'unité de traitement 32. Le ou les signaux S2 sont de préférence transmis à l'unité de traitement 32 par voie filaire, mais peuvent également dans une autre variante être transmis à l'unité de traitement 32 par des moyens de communication sans fil.

Dans une variante particulière de réalisation, telle que celle décrite plus en détail ci-après, le dispositif de détection 31 peut être conçu de manière à délivrer en parallèle pour l'unité de traitement 32 plusieurs signaux de détection qui dépendent chacun de l'angle de rotation α formé entre le véhicule tracteur 1 et la semi-remorque 2.

Dans une autre variante particulière de réalisation, le dispositif de détection 31 peut être conçu de manière à délivrer un unique signal de détection S2 pouvant présenter au moins deux états différents : un premier état (par exemple état bas) qui est caractéristique d'un alignement acceptable entre le véhicule tracteur 1 et la semi-remorque 2 ; un deuxième état (par exemple état haut) qui est caractéristique d'un défaut d'alignement entre le véhicule tracteur 1 et la semi-remorque 2, l'angle de rotation α détecté entre le véhicule tracteur 1 et la semi-remorque 2 étant trop important.

Dans une autre variante particulière de réalisation, le dispositif de détection 31 peut être conçu de manière à délivrer un signal de détection S2 mesurant l'angle de rotation α entre le véhicule tracteur 1 et la semi-remorque 2. Dans ce cas, l'unité de traitement 32 peut être conçue de manière à comparer ce signal avec un seuil prédéfini et à détecter un défaut d'alignement lorsque ce seuil est dépassé.

L'unité de traitement 32 est d'une manière générale conçue pour détecter automatiquement un risque de renversement du véhicule V à partir au moins du signal S1 délivré par le capteur de pression 30 et du ou des signaux S2 délivrés par le dispositif de détection 31.

L'unité de traitement 32 peut indifféremment selon l'invention être implémentée sous la forme d'un microprocesseur ou microcontrôleur apte à exécuter automatiquement un programme chargé dans une mémoire, ou être implémentée sous la forme d'un circuit à portes logiques, notamment un circuit à portes logiques programmable, par exemple de type FPGA, ou être un implémentée sous la forme d'un composant électronique spécifique de type ASIC.

De préférence, cette unité de traitement 32 est avantageusement montée sur le véhicule V et plus préférentiellement encore sur la semi-remorque 2. Néanmoins, dans une autre variante de réalisation, l'unité de traitement 32 pourrait être déportée en étant positionnée à plus ou moins grande distance du véhicule V, les signaux S1 et S2 étant dans ce cas transmis à l'unité de traitement 32 déportée par des moyens de communication sans fil ayant une portée de transmission adaptée.

L'unité de traitement 32 contrôle automatiquement et en permanence l'alignement entre le véhicule tracteur 1 et la semi-remorque 2 (angle a) au moyen du ou des signaux de détection S2 délivrés par le dispositif de détection 31 et contrôle automatiquement et en permanence la pression hydraulique P au moyen du signal S1 délivré par le capteur de capteur de pression 30.

Lorsque l'unité de traitement 32 détecte un défaut d'alignement entre le véhicule tracteur 1 et la semi-remorque 2, au moyen du ou des signaux de détection S2 délivrés par le dispositif de détection 31, et détecte en même temps, au moyen du signal S1, une pression hydraulique P qui n'est pas nulle et qui est supérieure à un seuil de pression Sp, l'unité de traitement 32 détecte dans ce cas automatiquement un risque de renversement de véhicule V et déclenche aussitôt une alarme visuelle et/ou sonore 33 (figure 7) pour le chauffeur du véhicule.

Plus particulièrement, l'unité de traitement 32 est apte à détecter automatiquement ledit risque de renversement du véhicule de transport industriel roulant V, tant que ledit défaut d'alignement entre le véhicule tracteur 1 et la semi-remorque 2 est détecté ou tant qu'une pression hydraulique P supérieure à un seuil de pression Sp est détectée par le capteur de pression 30.

Un défaut d'alignement est détecté par l'unité de traitement 32 lorsque angle de rotation α entre le véhicule tracteur 1 et la semi-remorque 2 est non nul, et de préférence lorsque cet angle α est supérieur à au moins un seuil compris entre 5° et 30°, et de préférence est supérieur à au moins un seuil compris 5° et 20°.

Dans une variante de réalisation, le seuil de pression Sp peut être prédéfini et non modifiable.

Dans une autre variante de réalisation, le seuil de pression Sp peut avantageusement être un seuil réglable, qui est modifiable par exemple par un utilisateur ou par le constructeur du système de sécurité 3 ou qui peut être calculé et peut être modifié par l'unité de traitement 32.

Plus le seuil de pression Sp est faible, et plus la détection automatique d'un risque de renversement peut intervenir de manière précoce. Il en résulte que plus le seuil de pression Sp est faible, et plus il y de chances que le chauffeur du véhicule soit averti de manière précoce d'un risque de renversement, alors que le caisson de chargement 22 est avantageusement encore dans la position basse de la figure 1. Le chauffeur du véhicule a donc suffisamment de temps pour réagir en commandant le circuit hydraulique d'alimentation du ou des vérins de levage hydrauliques 240, afin de couper manuellement l'alimentation hydraulique et éviter ainsi que le caisson de chargement 22 ne commence à être levé par rapport au châssis 21 en pivotant vers le haut, alors qu'un défaut d'alignement a été détecté.

Plus particulièrement, le seuil de pression Sp peut être choisi de manière à être inférieur ou égal à la pression hydraulique minimale nécessaire pour lever le caisson de chargement 22, lorsqu'il est chargé au maximum du poids total roulant autorisé (PTRA) du véhicule de transport industriel V.

De préférence le seuil de pression Sp peut être choisi de manière à être inférieur ou égal à la pression hydraulique minimale nécessaire pour lever le caisson de chargement lorsqu'il est chargé à 75% du poids total roulant autorisé (PTRA) du véhicule de transport industriel V.

Plus préférentiellement, le seuil de pression Sp peut être choisi de manière à être inférieur ou égal à la pression hydraulique minimale nécessaire pour lever le caisson de chargement lorsqu'il est chargé à la moitié du poids total roulant autorisé (PTRA) du véhicule de transport industriel V.

Plus préférentiellement encore, le seuil de pression Sp peut être choisi de manière à être inférieur ou égal à la pression hydraulique minimale nécessaire pour lever le caisson de chargement 22 lorsqu'il est chargé à un tiers du poids total roulant autorisé (PTRA) du véhicule de transport industriel V.

Dans une variante de réalisation le seuil de pression Sp est choisi de manière à être inférieur ou égal à la pression hydraulique minimale nécessaire pour lever le caisson de chargement 22 à vide.

Dans une variante préférée de réalisation le seuil de pression Sp est faible et est inférieur ou égal à 10 bars et peut plus particulièrement être égal à zéro.

Le contrôle du fonctionnement du véhicule industriel V équipé d'un système de sécurité 3, au cours d'une opération de déchargement de la semi-remorque 2 du véhicule industriel, peut dans un exemple préféré de mise en œuvre de l'invention être effectué de la manière suivante.

Le véhicule industriel V, avec sa semi-remorque 2 contenant un chargement, est amené par le chauffeur jusqu'à un site de déchargement. Initialement le ou les vérins de levage hydrauliques 240 ne sont pas alimentés et le caisson de chargement 22 de la semi-remorque 2 est en position basse sur le châssis 21 et n'est pas encore levé par le ou les vérins de levage hydrauliques 240 ; la pression P détectée par le capteur de pression 30 est nulle.

Pour décharger par voie gravitaire la semi-remorque 2 attelée au véhicule tracteur 1, le chauffeur du véhicule V commande les moyens de levage hydrauliques 24, de manière à alimenter le ou les vérins de levage hydrauliques 240, avec une pression hydraulique croissante. L'angle de rotation α entre le véhicule tracteur 1et la semi-remorque 2 et la pression hydraulique dans les moyens de levage hydrauliques 24 sont contrôlés automatiquement et en permanence par le système de sécurité 3, en sorte de détecter automatiquement un risque de renversement du véhicule de transport industriel roulant V pendant la phase de fonctionnement au cours de laquelle le ou les vérins de levage hydrauliques 240 sont alimentés sous pression mais le caisson de chargement 22 de la semi-remorque 2 est en position basse sur le châssis 21 et n'est pas encore levé par le ou les vérins de levage hydrauliques 240.

Lorsque le système de sécurité 3 détecte un risque de renversement du véhicule de transport industriel roulant V pendant ladite phase de fonctionnement susvisée, le chauffeur du véhicule coupe manuellement l'alimentation hydraulique du ou des vérins de levage hydrauliques 240.

Dans une autre variante, lorsque le système de sécurité 3 détecte un risque de renversement du véhicule de transport industriel roulant V pendant ladite phase de fonctionnement susvisée, il coupe automatiquement l'alimentation hydraulique du ou des vérins de levage hydrauliques 240, par exemple au moyen d'un signal de commande généré par l'unité de traitement 32 du système de sécurité 3.

On a représenté sur les figures 5, 6, 8, 9 et 10, un exemple particulier de réalisation du dispositif de détection 31, qui présente l'avantage d'être robuste et fiable et de pouvoir être facilement monté dans son intégralité sur la semi-remorque 2.

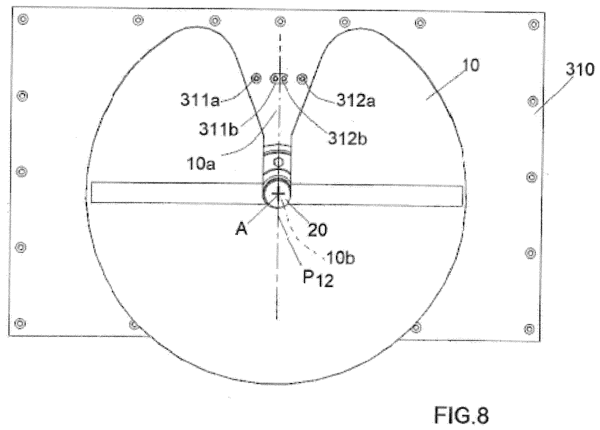

Ce dispositif de détection 31 comporte une plaque 310 qui est fixée à l'avant et sous le châssis 21 de la semi-remorque 2 et qui est traversée par le pivot d'attelage 20, de telle sorte qu'une fois la semi-remorque 2 attelée au véhicule tracteur 1, une partie au moins de cette plaque 310 est positionnée au-dessus de la sellette d'attelage 10 et (figure 8) couvre l'ouverture de guidage 10a en forme de V de la sellette d'attelage 10.

En référence à la figure 8, cette plaque 310 est équipée de plusieurs capteurs de proximité sans contact 311a, 311b, 312a, 312b, qui délivrent chacun en parallèle un signal de détection.

Ces capteurs de proximité sans contact 311a, 311b, 312a, 312b sont par exemple des capteurs inductifs ou des capteurs optiques.

Sur les figures 8 à 10, le plan P₁₂ est le plan vertical d'alignement du véhicule tracteur 1 et de la semi-remorque 2, qui passe par l'axe de rotation A et par l'axe longitudinal avant/arrière A2 de la semi-remorque 22. Les capteurs 311a et 311b sont positionnés d'un côté de ce plan P₁₂, et les capteurs 312a et 312b sont positionnés, de préférence de manière symétrique aux capteurs 311a et 311b, de l'autre côté de ce plan P₁₂.

Plus particulièrement ces capteurs 311a, 311b, 312a, 312b sont positionnés de telle sorte que lorsque le véhicule tracteur 1 et la semi-remorque sont parfaitement alignés (figure 8 - ouverture de guidage 10a de la sellette centrée par rapport au plan P₁₂ - angle de rotation α nul), tous les capteurs 311a, 311b, 312a, 312b sont positionnés en vis-à-vis de l'ouverture de guidage 10a en forme de V de la sellette 10 ; il en résulte qu'aucun des capteurs 311a, 311b, 312a, 312b ne détecte la présence de la sellette 10 lorsque le véhicule tracteur 1 et la semi-remorque sont parfaitement alignés.

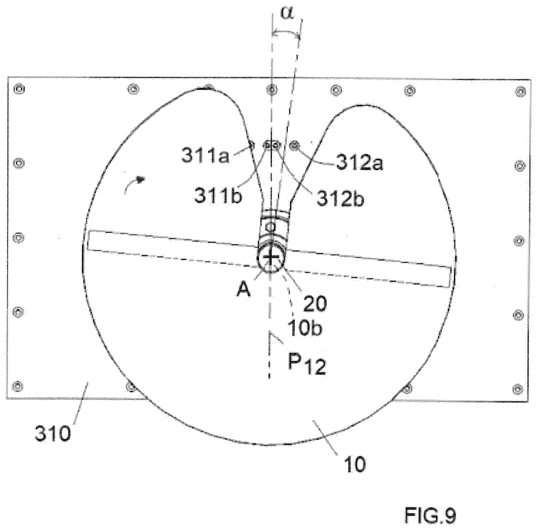

Lorsque le véhicule tracteur 1 commence à pivoter (figure 9) autour de l'axe A par rapport à la semi-remorque 2, la sellette 10 pivote autour de l'axe A par rapport à la plaque 310 portant les capteurs.

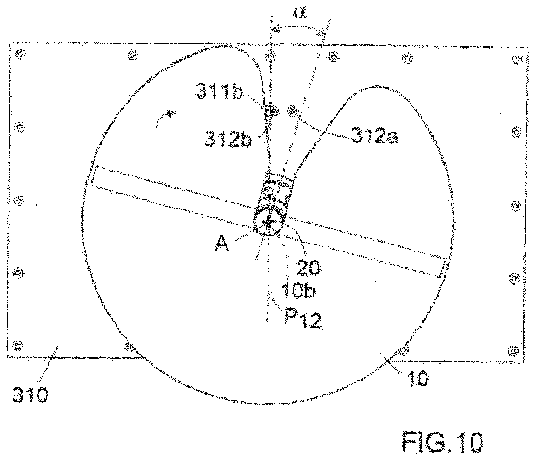

Lorsque la sellette 10 arrive dans une position angulaire dans laquelle elle est détectée par les deux capteurs 311a, 311b (figure 10) ou par les deux capteurs 312a, 312b (rotation inverse et symétrique de la figure 9), un défaut d'alignement est dans cas automatiquement détecté par l'unité de traitement 32.

Dans une variante de réalisation, le dispositif de détection 31 peut être conçu de manière transmettre à l'unité de traitement 32 en parallèle les signaux de détection S2 délivrés par les capteurs 311a, 311b, 312a, 312b, et l'unité de traitement 32 étant dans ce cas conçue pour traiter ces signaux de détection S2 et détecter un défaut d'alignement à partir de ces signaux.

Dans une variante de réalisation, le dispositif de détection 31 peut être conçu de manière à traiter automatiquement les signaux de détection délivrés en parallèle par les capteurs 311a, 311b, 312a, 312b et à générer, à destination de l'unité de traitement 32, un unique signal de détection S2 permettant d'informer l'unité de traitement 32 si l'angle α détecté est acceptable ou si l'angle α détecté est trop important et caractéristique d'un défaut d'alignement de la semi-remorque 2 et du véhicule tracteur 1.

Dans la variante de réalisation des figures 8 à 10, la valeur de l'angle de rotation α autour de l'axe A, qui est caractéristique d'un défaut d'alignement dépend, dans un sens de rotation, de la position des capteurs 311a, 311b par rapport à l'axe de rotation A, et dans l'autre sens de rotation, de la position des capteurs 312a, 312b par rapport à l'axe de rotation A.

La variante de réalisation ci-dessus peut également être mise en œuvre avec plus de quatre capteurs détectant la position en rotation de la sellette 10 autour de l'axe A, ou avec seulement deux capteurs détectant la position en rotation de la sellette 10 autour de l'axe A, par exemple seulement les deux capteurs 311b et 312b ou seulement les deux capteurs 311a et 312a.

La variante de réalisation ci-dessus peut également être mise en œuvre avec trois capteurs détectant la position en rotation de la sellette 10 autour de l'axe A, par exemple les deux capteurs 311b et 312b et un capteur qui remplace les deux capteurs 311a et 312a et qui est centré en étant positionné dans le plan P₁₂.

La variante de réalisation ci-dessus peut également être mise en œuvre avec seul capteur qui est centré en étant positionné dans le plan P₁₂.

En référence à la variante particulière de réalisation de la figure 7, et de manière non limitative de l'invention, le système de sécurité 3 peut également comporter une mémoire électronique 34 locale, fixe ou amovible. L'unité de traitement 32 peut être conçue de manière à stocker dans cette mémoire 34, de préférence en les horodatant, au moins la pression hydraulique P et une information relative à l'angle de rotation α détecté (par exemple état ou valeur de chaque signal de détection S2) à chaque détection d'un risque de renversement par l'unité de traitement 32.

L'unité de traitement 32 peut également être conçue de manière à stocker dans cette mémoire 34, de préférence en les horodatant, la pression hydraulique P et une information relative à l'angle de rotation α détecté (par exemple état ou valeur de chaque signal de détection S2) à intervalles de temps prédéfinis.

Ces données horodatées stockées dans la mémoire 34 peuvent avantageusement être récupérées ultérieurement par un tiers autorisé, et par exemple par le gestionnaire d'une flotte de véhicules industriels V ou par le constructeur du véhicule industriel V ou de la semi-remorque 2, à des fins d'analyse, notamment en cas de renversement.

De préférence, l'unité de traitement 32 et ladite mémoire électronique 34 sont logées à l'intérieur d'un boîtier de protection étanche, et plus particulièrement d'un boîtier qui est résistant aux chocs et qui est fermé et de préférence scellé au moyen d'un sceau permettant de contrôler si le boîtier a été ouvert.

En référence à la variante particulière de réalisation de la figure 7, et de manière non limitative de l'invention, le système de sécurité 3 peut également comporter des premiers moyens de communication sans fil 35, de faible portée, par exemple de type Bluetooth, permettant à l'unité de traitement 32 de communiquer avec un terminal portable 4, de type téléphone portable, positionné à proximité et/ou avec un écran 5 positionné dans la cabine du véhicule tracteur 1, de manière à communiquer au chauffeur du véhicule au moins une information visuelle et/ou sonore relative à la pression hydraulique P détectée et/ou à l'angle de rotation α détecté et/ou à un défaut d'alignement, ainsi qu'éventuellement à déclencher sur le terminal portable 4 et/ou sur l'écran 5 une alarme visuelle et/ou sonore en cas de risque de renversement détecté par l'unité de traitement 32.

En référence à la variante particulière de réalisation de la figure 7, et de manière non limitative de l'invention, le système de sécurité 3 peut également comporter des moyens de télécommunication sans fil 36, qui permettent de faire communiquer, sur une grande distance, l'unité de traitement 32 du système de sécurité 3 avec au moins un serveur 6 distant.

Dans une autre variante de réalisation, le système de sécurité 3 peut également comporter d'autres capteurs informant en temps réel l'unité de traitement 32 sur l'état ou le fonctionnement du véhicule V, tels que par exemple et de manière non exhaustive, un capteur de la vitesse de déplacement du véhicule V, un capteur de l'accélération du véhicule V , un capteur détectant l'angle de dévers du véhicule V, un capteur détectant l'inclinaison vers l'avant ou vers l'arrière du véhicule V, un capteur détectant l'inclinaison dans un plan vertical (angle d'écoulement) du caisson de chargement 22 de la semi-remorque 2 par rapport au châssis 21 de la semi-remorque, un capteur détectant la fermeture/ouverture de la porte arrière du caisson de chargement 22, etc...

## Revendications

1. Système de sécurité (3) pour véhicule de transport industriel (V) comportant un véhicule tracteur (1) et une semi-remorque (2), qui est apte à être attelée au véhicule tracteur (1) de manière à pouvoir pivoter par rapport au véhicule tracteur (1) au moins autour d'un axe de rotation vertical (A), ladite semi-remorque (2) comportant un châssis roulant (21) sur lequel est monté un caisson de chargement basculant (22) vide ou chargé, qui est apte à pivoter vers le haut par rapport au châssis roulant (21), et des moyens de levage hydrauliques (24), qui comportent au moins un vérin de levage hydraulique (240) et qui permettent de lever le caisson de chargement (22), en le faisant pivoter vers le haut par rapport au châssis roulant (21), le système de sécurité comportant un dispositif de détection (31) de la rotation du véhicule tracteur (1) par rapport à la semi-remorque (2) autour de l'axe de rotation vertical (A), **caractérisé en ce qu'**il comporte au moins un capteur de pression (30), qui est apte à détecter la pression hydraulique (P) dans les moyens de levage hydrauliques (24), et **en ce qu'**il est apte à détecter automatiquement un risque de renversement du véhicule de transport industriel (V), à partir de la pression hydraulique (P) détectée par le capteur de pression (30) et de l'angle de rotation (a) entre le véhicule tracteur (1) et la semi-remorque (2) détecté au moyen du dispositif de détection (31).

2. Système de sécurité selon la revendication 1, apte à détecter automatiquement un risque de renversement du véhicule de transport industriel (V) alors que le caisson de chargement (22) est en position basse sur le châssis (21) de la semi-remorque (2) et n'est pas soulevé par rapport au châssis (21) de la semi-remorque (2) .

3. Système de sécurité selon l'une quelconque des revendications 1 ou 2 , apte à détecter automatiquement un défaut d'alignement entre le véhicule tracteur (1) et la semi-remorque (2) au moyen du dispositif de détection (31) et à détecter automatiquement un risque de renversement du véhicule de transport industriel (V), lorsque ledit défaut d'alignement entre le véhicule tracteur (1) et la semi-remorque (2) est détecté et qu'une pression hydraulique (P) supérieure à un seuil de pression (Sp) est détectée par le capteur de pression (30), et de préférence tant que ledit défaut d'alignement entre le véhicule tracteur (1) et la semi-remorque (2) est détecté ou tant qu'une pression hydraulique (P) supérieure à un seuil de pression (Sp) est détectée par le capteur de pression (30), ledit seuil de pression (Sp) étant de préférence réglable.

4. Système de sécurité selon la revendication 3, dans lequel le seuil de pression (Sp) est inférieur ou égal à la pression hydraulique minimale nécessaire pour soulever le caisson de chargement (22) chargé au maximum du poids total roulant autorisé (PTRA) du véhicule de transport industriel (V), de préférence dans lequel le seuil de pression (Sp) est inférieur ou égal à la pression hydraulique minimale nécessaire pour lever le caisson de chargement (22) chargé à 75% du poids total roulant autorisé (PTRA) du véhicule de transport industriel (V), plus préférentiellement dans lequel le seuil de pression (Sp) est inférieur ou égal à la pression hydraulique minimale nécessaire pour lever le caisson de chargement (22) chargé à la moitié du poids total roulant autorisé (PTRA) du véhicule de transport industriel (V), plus préférentiellement encore dans lequel le seuil de pression (Sp) est inférieur ou égal à la pression hydraulique minimale nécessaire pour lever le caisson de chargement (22) chargé à un tiers du poids total roulant autorisé (PTRA) du véhicule de transport industriel (V), plus préférentiellement encore dans lequel le seuil de pression (Sp) est inférieur ou égal à la pression hydraulique minimale nécessaire pour lever le caisson de chargement (22) à vide.

5. Système de sécurité selon l'une quelconque des revendications 3 à 4, dans lequel le seuil de pression (Sp) est inférieur ou égal à 10 bars et plus particulièrement est égal à zéro.

6. Système de sécurité selon l'une quelconque des revendications 3 à 5, apte à détecter ledit défaut d'alignement entre le véhicule tracteur (1) et la semi-remorque (2), lorsque l'angle de rotation (a) entre le véhicule tracteur (1) et la semi-remorque (2) détecté au moyen du dispositif de détection (31) est supérieur à au moins un seuil de détection prédéfini, le seuil de détection étant de préférence compris entre 5° et 30°, et plus préférentiellement encore entre 5° et 20°.

7. Système de sécurité selon l'une quelconque des revendications précédentes, dans lequel le capteur de pression (30) est monté sur le vérin de levage hydraulique (240) et permet de détecter la pression hydraulique dans ce vérin de levage hydraulique (240).

8. Système de sécurité selon l'une quelconque des revendications précédentes, dans lequel le dispositif de détection (31) comporte un ou plusieurs capteurs de proximité sans contact (311a ; 311b ; 312a ; 312b), et de préférence dans lequel le ou les capteurs de proximité sans contact (311a; 311b; 312a; 312b) sont fixés à la semi-remorque (2) et/ou de préférence dans lequel le ou les capteurs de proximité sans contact (311a ; 311b ; 312a ; 312b) sont des capteurs inductifs ou des capteurs optiques.

9. Système de sécurité selon l'une quelconque des revendications précédentes, apte à déclencher automatiquement une alarme visuelle et/ou sonore, en cas de détection d'un risque de renversement du véhicule industriel (V).

10. Système de sécurité selon l'une quelconque des revendications précédentes, comportant une mémoire électronique (34) fixe ou amovible, et dans laquelle le système sécurité (3) est apte à stocker, de préférence en les horodatant, la pression hydraulique (P) détectée par le capteur de pression (30) et une information sur l'angle de rotation (a) détecté par le dispositif de détection (31), au moins à chaque détection d'un risque de renversement et/ou à intervalles de temps prédéfinis.

11. Système de sécurité selon la revendication 10, dans lequel au moins ladite mémoire électronique (34) est logée à l'intérieur d'un boîtier de protection, qui est fermé, et qui de préférence est scellé au moyen d'un sceau permettant de contrôler si le boîtier a été ouvert.

12. Semi-remorque (2) comportant un châssis roulant (21) sur lequel est monté un caisson de chargement (22), qui est apte à pivoter vers le haut par rapport au châssis roulant (21), des moyens de levage (24), qui comportent au moins un vérin de levage hydraulique (240), et qui permettent de lever le caisson de chargement (22), en le faisant pivoter vers le haut par rapport au châssis roulant (21), et un moyen d'attelage (20) à un véhicule tracteur (1), ladite semi-remorque (2) étant équipée d'un système de sécurité (3) de l'une quelconque des revendications précédentes.

13. Véhicule de transport industriel (V) comportant un véhicule tracteur (1) et une semi-remorque (2), qui est apte à être attelée au véhicule tracteur, de manière à pouvoir pivoter par rapport au véhicule tracteur au moins autour d'un axe de rotation vertical (A), ladite semi-remorque comportant un châssis roulant (21) sur lequel est monté un caisson de chargement (22), qui est apte à pivoter vers le haut par rapport au châssis roulant, et des moyens de levage hydrauliques (24), qui comportent au moins un vérin de levage hydraulique (240) et qui permettent de lever le caisson de chargement (22), en le faisant pivoter vers le haut par rapport au châssis roulant (21), ledit véhicule de transport industriel étant équipé d'un système de sécurité (3) de l'une quelconque des revendications 1 à 11, le système de sécurité (3) étant de préférence monté sur la semi-remorque (2).

14. Véhicule de transport industriel et système de sécurité (3) selon la revendication 13, dans lequel le véhicule tracteur (1) comporte une sellette d'attelage (10) et la semi-remorque (2) comporte un pivot d'attelage (20) apte à coopérer avec la sellette d'attelage (10), et dans lequel le dispositif de détection (31) est apte à détecter la rotation de la sellette (10) par rapport au pivot d'attelage (20), sans être en contact avec ladite sellette (10).

15. Véhicule de transport industriel (V) et système de sécurité (3) selon l'une quelconque des revendications 13 à 14, le système de sécurité (3) étant apte à détecter automatiquement ledit risque de renversement du véhicule de transport industriel (V), pendant que le caisson de chargement (22) est en position basse sur le châssis (21) et n'est pas soulevé par rapport au châssis (21), au moins lorsque le poids total du véhicule de transport industriel (V) chargé est égal au poids total roulant autorisé (PTRA) du véhicule de transport industriel (V), de préférence au moins lorsque le poids total du véhicule de transport industriel (V) chargé est égal à 75% du poids total roulant autorisé (PTRA) du véhicule de transport industriel (V), plus préférentiellement au moins lorsque le poids total du véhicule de transport industriel (V) chargé est égal à la moitié du poids total roulant autorisé (PTRA) du véhicule de transport industriel (V), et plus préférentiellement encore au moins lorsque le poids total du véhicule de transport industriel (V) chargé est égal à un tiers du poids total roulant autorisé (PTRA) du véhicule de transport industriel (V) .

16. Véhicule de transport industriel (V) et système de sécurité (3) selon l'une quelconque des revendications 13 à 14, le système de sécurité (3) étant apte à détecter automatiquement ledit risque de renversement du véhicule de transport industriel (V), au moins lorsque le caisson de chargement (22) est vide et en position basse sur le châssis (21) de la semi-remorque (2) et n'est pas soulevé par rapport au châssis (21).

17. Procédé de contrôle du fonctionnement du véhicule de transport industriel (V) de l'une quelconque des revendications 13 à 16 au cours d'une opération de déchargement de la semi-remorque (2) du véhicule industriel, au cours duquel initialement le ou les vérins de levage hydrauliques (240) ne sont pas alimentés et le caisson de chargement (22) de la semi-remorque (2) est en position basse sur le châssis (21) et n'est pas encore levé par le ou les vérins de levage hydrauliques (240), et au cours duquel on commande les moyens de levage hydrauliques (24), de manière à alimenter le ou les vérins de levage hydrauliques (240), avec une pression hydraulique croissante, et on contrôle en permanence au moyen du système de sécurité (3) l'angle de rotation (a) entre le véhicule tracteur (1) et la semi-remorque (2) et la pression hydraulique dans les moyens de levage hydrauliques (24) en sorte de détecter automatiquement, au moyen du système de sécurité (3), un risque de renversement du véhicule de transport industriel (V) pendant la phase de fonctionnement au cours de laquelle le ou les vérins de levage hydrauliques (240) sont alimentés sous pression mais le caisson de chargement (22) de la semi-remorque (2) est en position basse sur le châssis (21) et n'est pas encore levé par le ou les vérins de levage hydrauliques (240), et de préférence au cours duquel on coupe automatiquement ou manuellement l'alimentation hydraulique du ou des vérins de levage hydrauliques (240), lorsqu'on détecte automatiquement au moyen du système de sécurité (3) un risque de renversement du véhicule de transport industriel (V) pendant la phase de fonctionnement au cours de laquelle le ou les vérins de levage hydrauliques (240) sont alimentés sous pression mais le caisson de chargement (22) de la semi-remorque (2) est en position basse sur le châssis (21) et n'est pas encore levé par le ou les vérins de levage hydrauliques (240).
